# EUROPEAN PATENT APPLICATION

(11) **EP 1 914 158 A2**
(43) Date of publication of application: **23.04.2008**
(21) Application number: 07019855.1
(22) Date of filing: 10.10.2007
(51) Int. Cl.: B62M 7/02

(54) **Straddle-type vehichle**

(30) Priority: 18.10.2006 JP 2006283647
(71) Applicant: Yamaha Hatsudoki Kabushiki Kaisha, Iwata-shi, Shizuoka-ken 438-8501 (JP)
(72) Inventor: Takahashi, Tomoyasu, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a straddle-type vehicle, in particular two-wheeled vehicle, comprising: a fuel cell unit having a fuel cell stack and a fuel cell controller, and a body cover for surrounding the fuel cell controller and the fuel cell stack, the body cover having a head wind inlet at a front end of the body cover, and a head wind outlet at a rear end of the body cover, and a head wind passage in the body cover between the head wind inlet and the head wind outlet, wherein the head wind passage encloses therein the fuel cell controller, and wherein the fuel cell stack is positioned outside of the head wind passage.

## Description

The present invention relates to a straddle-type vehicle, in particular to an electric two-wheeled vehicle with a motor using a fuel cell and a secondary battery as a power source, the motor rotating a drive wheel to drive the vehicle.

One conventional electric two-wheeled vehicle of this type is disclosed in Patent Document 1 for example. The electric two-wheedled vehicle disclosed in Patent Document 1 is an electric bicycle in which a pedaling force generated by a rider pedaling the bicycle and a driving power from the motor are transmitted together to a rear wheel.

This electric bicycle has a fuel cell unit disposed below a seat and in front of the rear wheel.

This fuel cell unit is enclosed in a casing and installed below the seat. In the casing, there are enclosed a fuel cell stack, a fuel cell controller, a secondary battery, a fuel tank and the like, which constitute the fuel cell unit.

The casing has a head wind inlet in a lower front part of the casing, and a head wind outlet in an upper rear part. The casing is designed to make a head wind flow therethrough through the head wind inlet toward the head wind outlet in a manner cooling the above various components in the casing by the head wind.

Of the above various components enclosed in the casing, the fuel cell stack is positioned in a vertical middle part of the casing, and the fuel cell controller is positioned closely in front of or closely below the fuel cell stack. The secondary battery is positioned at the bottom in the casing, and the fuel tank is positioned close to the head wind outlet of the casing.

In front of the fuel cell stack and in a position therebelow, there is provided a heat insulator to prevent a reduction in electricity generation efficiency due to the fuel cell stack being overly cooled by a head wind.

In such electric bicycle having the fuel cell unit in the casing, the above various components in the casing can be cooled by a head wind flowing through the casing during the bicycle being pedaled.
Patent Document 1: JP-A-2002-362470

Unfortunately, the conventional electric bicycle structured as described above cannot cool the various components in the casing to proper temperatures by a head wind. One of the possible reasons for this is that a head wind flowing through the head wind inlet into the casing first cools the secondary battery and then cools the fuel cell controller. That is, the fuel cell controller having a relatively high heat release value cannot be cooled effectively by the head wind.

The other reason is that since the fuel cell stack is exposed to the head wind, it is difficult to keep the fuel cell stack at temperatures high enough to provide maximum electricity generation efficiency.

Thus, in the conventional electric two-wheeled vehicles, there remains a need for a structure in which the above various components are cooled to proper temperatures.

In view of the foregoing problem, it is, therefore, an object of the present invention to provide an electric two-wheeled vehicle in which a fuel cell stack is kept at temperatures high enough to provide enhanced electricity generation efficiency, while the other components of a fuel cell unit are cooled by a head wind to proper temperatures.

This objective is solved in an inventive manner by a straddle-type vehicle, in particular two-wheeled vehicle, comprising: a fuel cell unit having a fuel cell stack and a fuel cell controller, and a body cover for surrounding the fuel cell controller and the fuel cell stack, the body cover having a head wind inlet at a front end of the body cover, and a head wind outlet at a rear end of the body cover, and a head wind passage in the body cover between the head wind inlet and the head wind outlet, wherein the head wind passage encloses therein the fuel cell controller, and wherein the fuel cell stack is positioned outside of the head wind passage.

According to a preferred embodiment, the straddle-type vehicle further comprises a hydrogen storage container storing therein a hydrogen gas to be supplied to the fuel cell unit and a secondary battery rechargeable by the fuel cell unit, wherein the fuel cell controller is positioned on the fuel cell stack, the secondary battery is positioned in a rearward direction of the fuel cell controller, and the hydrogen storage container is positioned behind the secondary battery.

Preferably, the body cover is formed to surround the fuel cell controller, the fuel cell stack, the secondary battery and the hydrogen storage container in a vertical direction and on both lateral sides thereof, and wherein the head wind passage in the body cover between the head wind inlet and the head wind outlet encloses therein the fuel cell controller, the secondary battery and the hydrogen storage container.

Further, preferably the head wind inlet at a front end of the body cover is formed in a part above the fuel cell stack.

Still further, preferably the fuel cell stack is enclosed in a bottom part of a case, and the fuel cell controller is enclosed in an upper projection of the case.

Therein, it is beneficial if the fuel cell controller is in contact with a top wall and lateral sidewalls forming together the upper projection, for heat transfer between the fuel cell controller and the upper projection.

It is further beneficial if the upper projection of the case and a footrest section of the body cover define a space therebetween.

Preferably, a heat sink shaped so as to extend in the vertical and longitudinal directions in the space is attached at least to one of the lateral sides of the upper projection of the case.

Further, preferably the space formed to surround the upper projection on the upper side and on both lateral sides thereof is larger than a gap between the bottom part of the case and a footrest portion of the body cover.

Still further, preferably the head wind inlet is provided closely behind the front wheel.

According to another preferred embodiment, the straddle-type vehicle further comprises a front wheel and a seat, and a leg space therebetween, and a case shaped so as to project upward as seen in a longitudinal direction of a vehicle body, the case enclosing therein the fuel cell stack and the fuel cell controller and being positioned at the bottom of the leg space, wherein the fuel cell stack is positioned at a bottom part in the case, the fuel cell controller is positioned in an upper projection of the case, and the head wind passage is formed between both lateral sides and the upper side of the upper projection, and the body cover.

According to yet another preferred embodiment, the straddle-type vehicle further comprises an electric motor supplied with electricity from at least one of the fuel cell unit and the secondary battery to rotate a drive wheel.

In the following, the present invention is explained in greater detail with respect to several embodiments thereof in conjunction with the accompanying drawings, wherein:
- FIG. 1: is a side elevation illustrating the structure in a body cover of an electric two-wheeled vehicle according to the present embodiment,
- FIG. 2: is a front elevation illustrating the structure in the body cover of the electric two-wheeled vehicle according to the present embodiment,
- FIG. 3: is a perspective view illustrating the structure in the body cover of the electric two-wheeled vehicle according to the present embodiment,
- FIG. 4: is a vertical cross-sectional view of the body cover and a case,
- FIG. 5: is a perspective view seen from the front left side of the electric two-wheeled vehicle according to the present embodiment,
- FIG. 6: is a side elevation of the electric two-wheeled vehicle according to the present embodiment, and
- FIG. 7: is a perspective view seen from the rear right side of the electric two-wheeled vehicle according to the present embodiment.

### Description of Reference Numerals and Symbols:

2: front wheel
3: seat
4: leg space
6: body cover
7: rear arm
8: motor
9: rear wheel
11: fuel cell stack
12: fuel cell unit
13: secondary battery
14: hydrogen cylinder
22b: footrest
41: case
51: bottom part
52: upper projection
53: fuel cell controller
55: head wind inlet
56: head wind outlet
57: bottom wall
61: head wind passage
S1-S3: space

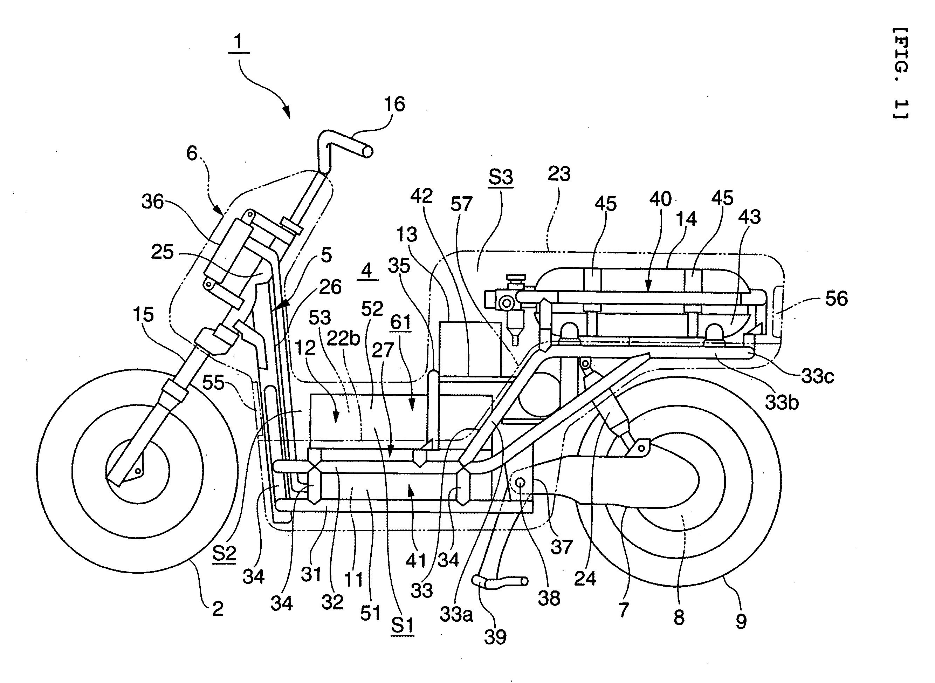

An embodiment of an electric two-wheeled vehicle will now be described in detail with reference to FIGs. 1 to 7.

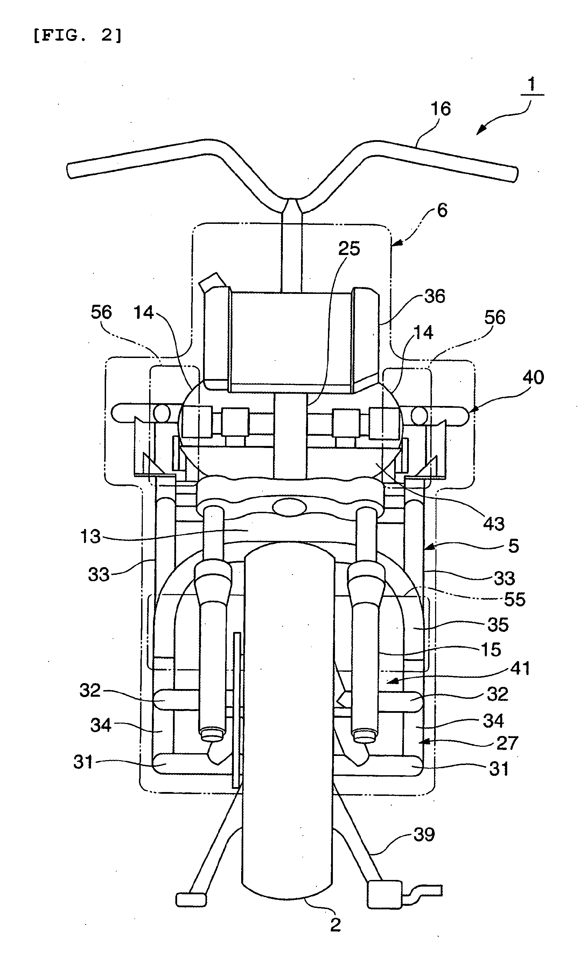

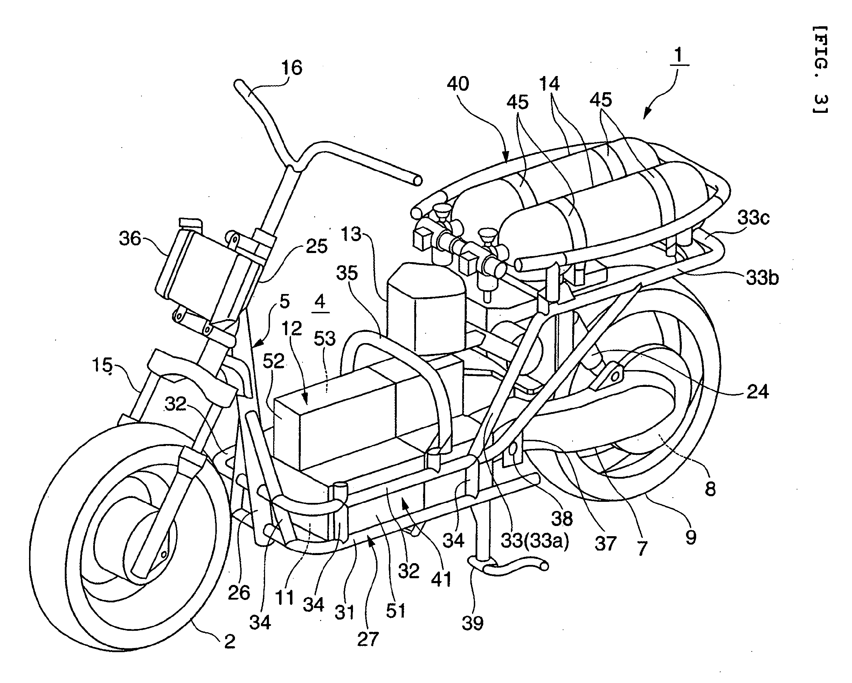

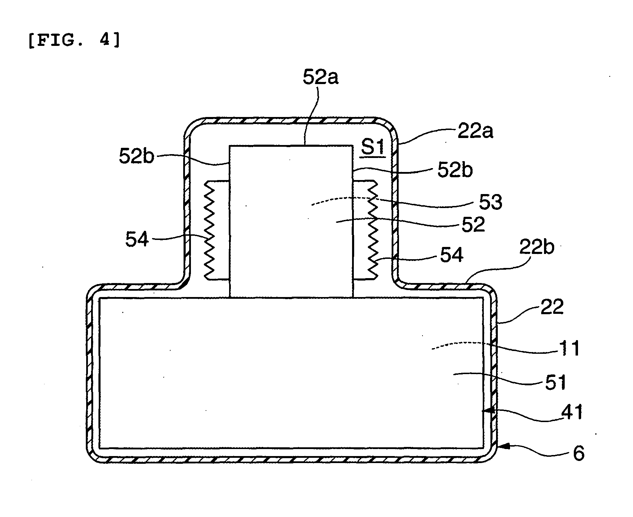

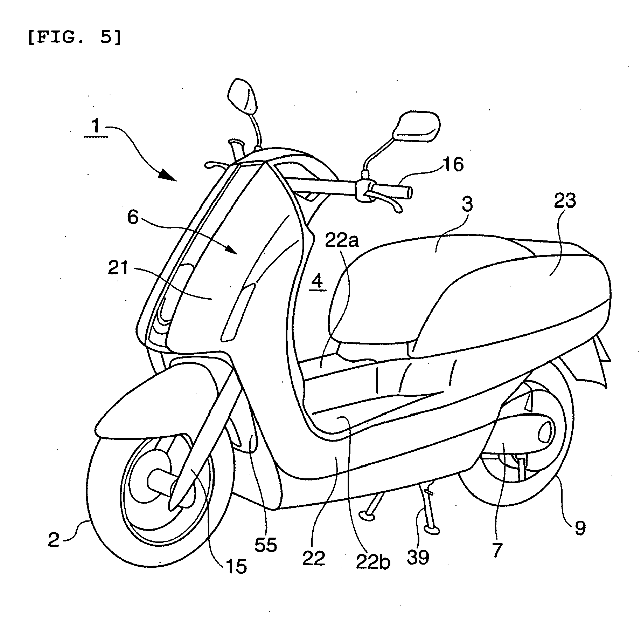

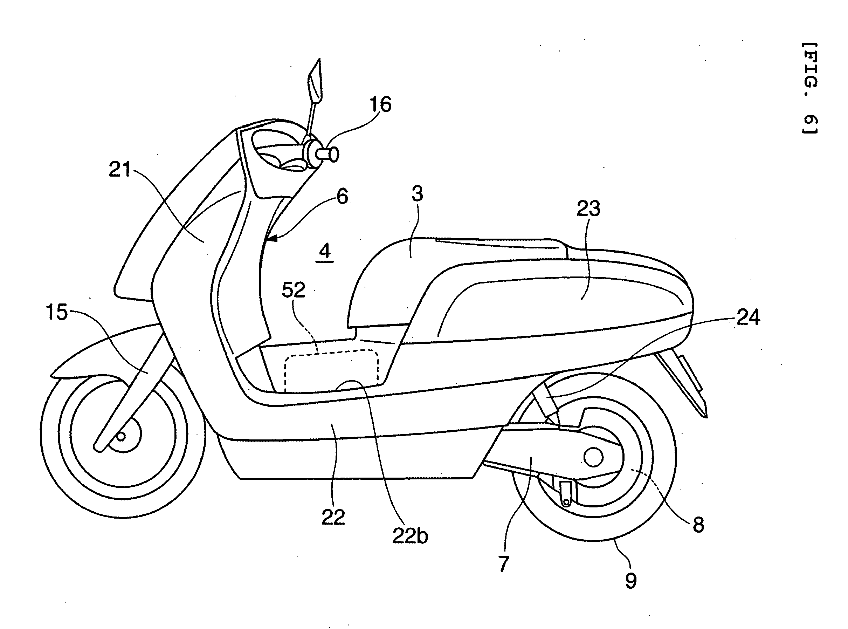

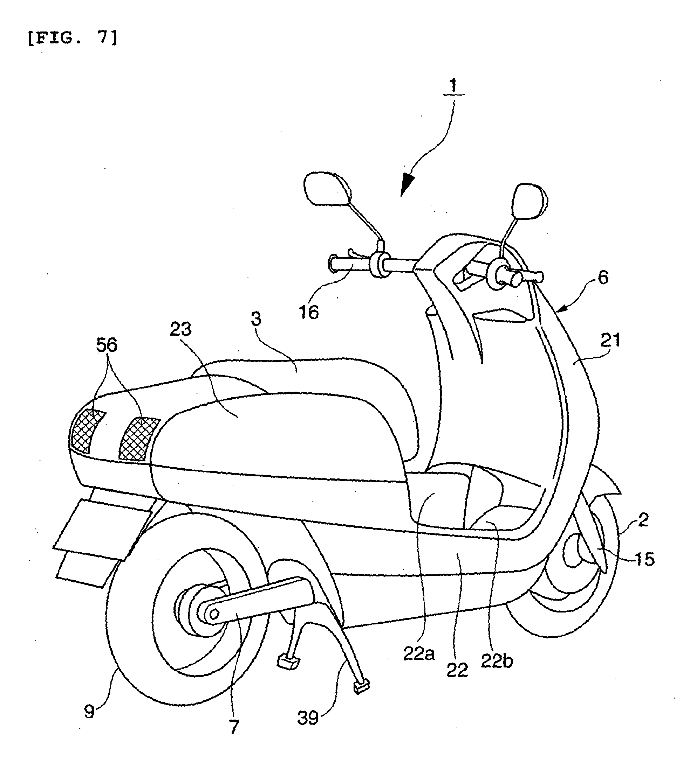

FIG. 1 is a side elevation illustrating the structure in a body cover of an electric two-wheeled vehicle according to the present embodiment; FIG. 2 is a front elevation of FIG. 1; FIG. 3 is a perspective view of FIG. 1; FIG. 4 is a vertical cross-sectional view of the body cover and a case; FIG. 5 is a perspective view seen from the front left side of the electric two-wheeled vehicle according to the present embodiment; FIG. 6 is a side elevation of FIG. 5; and FIG. 7 is a perspective view seen from the rear right side of the two-wheeled vehicle of FIG. 5.

In the drawings, reference numeral 1 denotes a motorcycle in accordance with this embodiment.

As shown in FIGs. 1 and 6, the electric two-wheeled vehicle 1 is of a scooter-type, and has a leg space 4 defined between a front wheel 2 and a seat 3. The two-wheeled vehicle 1 includes a cover 6 for covering components of a vehicle body including a body frame 5 (see FIG. 1), which will be described below.

The electric two-wheeled vehicle 1 is driven by a motor 8 included in rear arms 7 as the motor 8 rotates a rear wheel 9.

As shown in FIGs. 1 and 3, a fuel cell unit 12 and a secondary battery 13 are used as a power source for the motor 8. The fuel cell unit has a fuel cell stack 11 and is installed at the bottom of the leg space 4. The secondary battery 13 is charged by the fuel cell unit 12. The fuel cell unit 12 can generate electricity using hydrogen supplied from two hydrogen cylinders 14 provided at a rear part of a vehicle body and oxygen in the ambient atmosphere. The hydrogen cylinders 14 form a hydrogen storage container according to the present embodiment.

As shown in FIG. 6, the body cover 6 includes a front section 21, a footrest section 22 and a rear section 23. The front section 21 covers an upper part of front forks 15 and a lower part of a steering handlebar 16. The footrest section 22 extends from the lower end of the front section 21 to a lower front part of a seat 3 while passing through a lower part of the leg space 4. The rear section 23 extends from the rear end of the footrest section 22 to a position above the rear wheel while passing along a lower part of the seat 3.

As shown in FIGs. 1, 2 and 5 to 7, the front section 21 and the rear section 23 are formed to cover the rest of a vehicle body other than parts through which the front forks 15, the rear arms 7 and a rear cushion unit 24 extend, both in a vertical direction and in a vehicle width direction.

As shown in FIG. 4, the footrest section 22, forming the bottom of the leg space 44, of the body cover 6 has an upward-projecting cross section as seen in a longitudinal direction of the vehicle body. On the footrest section 22, there are formed a projection 22a at the middle in the vehicle width direction, and a footrest 22b lowered in height on both lateral sides of the projection 22a.

The electric two-wheeled vehicle 1 is driven by a rider straddling the seat 3 as he/she grips the steering handlebar 16 in a forward direction of the rider with his/her feet on the footrest 22b.

As shown in FIGs. 1 and 2, the body frame 5 of the electric two-wheeled vehicle 1 includes a head pipe 25 for supporting the front forks 15 and the steering handlebar 16 for steering movement, a down tube 26 extending downward from the head pipe 25, and a main frame 27 made up of a plurality of pipes welded to a lower part of the down tube 26.

The main frame 27 is made up of a pair of left and right lower pipes 31, a pair of left and right middle pipes 32, an upper pipe 33, a plurality of reinforcement pipes 34, a cross member 35 and the like. The lower pipes 31 are welded to the lower end of the down tube 26. The middle pipes 32 are welded to the down tube 26 in a position above the lower pipes 31. The upper pipe 33 is welded to middle parts of the middle pipes 32 and extend upward.

To the head pipe 25, a radiator 36 is attached through which coolant for cooling the fuel cell stack 11 flows.

As shown in FIG. 2, on the front side of the vehicle body, the lower pipes 31 and the middle pipes 32 are formed to extend rearward while passing by both lateral sides of the footrest 22. The middle pipe 32 is angled at a part corresponding to the rear end of the footrest 22 and extends obliquely upward and rearward.

These inclined parts of the middle pipes 32 are provided with a pair of left and right rear arm brackets 37 for connecting the front ends of the rear arms 7. A pivot shaft 38 extends between and attached to the left rear arm bracket 37 and the right rear arm bracket 37. The front end of the rear arm 7 is supported about the pivot shaft 38 for vertical pivotal movement. A main stand 9 is attached at the front end of the rear arm 7 in a position therebelow.

The upper pipe 33 includes a pair of left and right front parts 33a and 33a, a pair of left and right rear parts 33b and 33b, and a lateral part 33c. The paired left and right front parts 33a and 33a extend obliquely upward and rearward from the respective middle pipes 32 in proximity to front parts of the angled parts of the middle pipes 32. The paired left and right rear parts 33b and 33b extend generally horizontally in the longitudinal direction of the vehicle body in a position above the rear wheel 9, as seen in the side view. The lateral part 33c connects the rear ends of the rear parts 33b, 33b. As seen in the plan view, the upper pipe is in a U-configuration that is open forward.

The width of the upper pipe 33 in the vehicle width direction is set to be the same as the width between the paired left and right middle pipes 32. In a position above the front parts of the upper pipe 33, the seat 3 is provided. In a position above the rear parts 33b and the lateral part 33c of the upper pipe 33, there is provided a protector 40 surrounding the hydrogen cylinders 14 on the lateral sides and the rear side thereof.

The rear cushion unit 24 is disposed between the left rear part 33b of the upper pipe 33 and the rear arm 7. The rear part 33b is welded at the longitudinal middle to the rear end of the middle pipe 32 to be supported by the middle pipe 32 from below.

As shown in FIGs. 1 to 3, the fuel cell unit 12 is enclosed in a case 41 installed at the bottom of the leg space 4. As shown in FIG. 1, the secondary battery 13 rechargeable by the fuel cell unit 12 is disposed above the rear end of the case 41 and below the seat 3. The secondary battery 13 is supported by the upper pipe 33 and the cross member 35 of the body frame 5 via a stay 42.

The two hydrogen cylinders 14, 14 storing therein a hydrogen gas to be supplied to the fuel cell unit 12 are each placed on a tank holder 43 at a rear part of the vehicle body to be arranged side by side in the vehicle width direction while directing in the longitudinal direction of the vehicle body. Each hydrogen cylinder is tightly bound and fixed to the tank holder 43 with bands 45. The tank holder 43 is supported by the rear part 33b of the upper pipe 33 of the body frame 5.

As shown in FIG. 4, the case 41 for holding the fuel cell unit 12 therein is shaped so as to project upward as seen in the longitudinal direction of the vehicle body, and is enclosed in the footrest section 22 of the body cover 6. Specifically, the case 41 includes a bottom part 51 and an upper projection 52. The bottom part 51 has a relatively large width in the vehicle width direction. The upper projection 52 projects upward from the upper end of the case 41 at the middle in the vehicle width direction. The upper projection 52 is inserted into the projection 22a of the body cover 6 from below. The case 41 is fixedly supported by the lower pipes 31 of the body frame 5. In FIG. 4, the footrest section 22 of the body cover 6 is shown as an integral piece. In fact, the body cover 6 is formed by a plurality of covers (not shown) assembled together.

The fuel cell unit 12 is made up of a fuel cell stack 11 enclosed in the bottom part 51 of the case 41, a fuel cell controller 53 enclosed in the upper projection 52 of the case 41, and the like. The fuel cell controller is in contact with a top wall 52a and lateral sidewalls 52b forming together the upper projection 52, for heat transfer between the fuel cell controller and the upper projection 52. It should be noted that although not shown, fuel cell components are enclosed in a rear part of the case 41.

As shown in FIG. 4, the upper projection 52 of the case 41 and the footrest section 22 of the body cover 6 (projection 22a) define a space S1 therebetween. To both lateral sides of the upper projection 52 of the case 41, heat sinks 54 are attached shaped so as to extend in the vertical and longitudinal directions in the space S1. On the other hand, the bottom portion 51 of the case 41 and the footrest section 22 of the body cover 6 define only a gap of about the same size as a clearance.

The space S1 is formed to surround the upper projection 52 on the upper side and on both lateral sides thereof and extend in the longitudinal direction of the vehicle body in the footrest section 22. At the front end of the footrest section, the space S1 communicates with a head wind inlet 55 (see FIGs. 1 and 5) formed at the front end of the body cover 6, through a space S2 in the body cover 6. As shown in FIG. 1, the head wind inlet 55 is formed in the body cover 6 in a position behind the front wheel 2 and above the bottom part 51 of the case 41 (fuel cell stack 11) to be open forward of the vehicle body. As shown in FIG. 2, the head wind inlet 55 extends from the left end to the right end of the body cover 6.

As shown in FIGs. 1 and 7, at the rear end of the footrest section, the space S1 communicates with head wind outlets 56 formed at the rear end of the body cover 6, through a space S3 in the body cover 6. The space S3 is formed in the rear section 23 of the body cover 6. As shown in FIG. 2, two head wind outlets 56 are formed in an upper part of the rear section 23 of the body cover to be positioned in proximity to both lateral sides of the hydrogen cylinders 14 as seen in the longitudinal direction of the vehicle body.

The space S3 is defined by an upper wall formed by the seat 3 and the upper end of the body cover 6; a pair of left and right sidewalls formed by both lateral sides of the rear section of the body cover 6; and a bottom wall 57 (see FIG. 1) formed by a tabular member extending in the longitudinal direction of the vehicle body in the rear section of the body cover 6. The bottom wall 57 extends obliquely upward and rearward from the rear end of the footrest 22b of the body cover 6 along the front parts 33a of the upper pipe 33, and further extends rearward along the rear parts 33b of the upper pipe 33. In a front part of the space S3, the secondary battery 13 is disposed, and in a rear part of the space S3, the hydrogen cylinders 14 are disposed.

These spaces S1 to S3 form a connected space extending in the longitudinal direction of the vehicle body. In other words, the electric two-wheeled vehicle 1 in accordance with this embodiment has a head wind passage 61 formed by the space S1 to S3 in the body cover 6 between the head wind inlet 55 and the head wind outlets 56. In the head wind passage 61, the fuel cell controller 53, the secondary battery 13 and the hydrogen cylinders 14 are disposed in series in that order.

In the electric two-wheeled vehicle 1 having the head wind passage 61 in the body cover 6, a head wind flows through the head wind inlet 55 into the head wind passage 61 as the vehicle is driven. The head wind flows from the space S2 to the space S1 between the body cover 6 and the case 41, and as the head wind passes through the space S1, the upper projection 52 of the case 41 will be exposed to the head wind. More specifically, the upper wall 52a and lateral sidewalls 52b, 52b of the upper projection 52, as well as the heat sinks 54 will be exposed to the head wind, which cools the fuel cell controller 53.

Thereafter, the head wind flows into the space S3 to cool the secondary battery 13 and the hydrogen cylinders 14 before escaping rearward of the body cover 6 through the head wind outlets 56.

Since the fuel cell stack 11, which is in the body cover 6, is positioned outside of the head wind passage 61 described above, unnecessary cooling of the fuel cell stack due to the head wind is avoided without additional use of a heat insulator.

Thus, in the electric two-wheeled vehicle 1 in accordance with this embodiment, the temperature of the fuel cell stack 11 can be raised promptly and kept to temperatures high enough to enhance electricity generation efficiency. Further, in the electric two-wheeled vehicle 1, the fuel cell controller 53 is positioned in proximity to the downstream side of the head wind inlet 55. This makes it possible to effectively cool the fuel cell controller 53 having a relatively high heat release value by the head wind of the lowest temperature. Furthermore, the secondary battery 13 and the hydrogen cylinders 14 have a relatively low heat release value. Accordingly, they can be cooled well even by the head wind which has already been used for cooling the fuel cell controller 53.

Therefore, in accordance with this embodiment, the present teaching enables production of the electric two-wheeled vehicle 1 in which the fuel cell unit 12, the secondary battery 13 and the hydrogen cylinders 14 are cooled by a head wind to proper temperatures.

Further, in accordance with this embodiment, the head wind inlet 55 is provided closely behind the front wheel 2. This allows a head wind to enter the head wind passage 61 more easily, and thus a larger volume of a head wind is introduced therein to thereby provide more enhanced cooling efficiency of the above components.

In accordance with this embodiment, the head wind passage 61 (space S1) is formed above and on the lateral sides of the upper projection 52 of the case 41 (fuel cell controller 53). Thus, the fuel cell controller 53 can be cooled both on the upper side and on the lateral sides thereof. As a result, the volume of a head wind flowing through the head wind passage 61 increases, and also the area of a part of the upper projection 52 to be exposed to the head wind increases. This provides more effective cooling for the fuel cell controller 53.

The description above discloses, in order to achieve the above object, a first embodiment of an electric two-wheeled vehicle including: a fuel cell unit having a fuel cell stack and a fuel cell controller; a hydrogen storage container storing therein a hydrogen gas to be supplied to the fuel cell unit; a secondary battery rechargeable by the fuel cell unit; a motor supplied with electricity from at least one of the fuel cell unit and the secondary battery to rotate a drive wheel, in which the fuel cell controller is positioned on the fuel cell stack; the secondary battery is positioned in a rearward direction of the fuel cell controller; and the hydrogen storage container is positioned behind the secondary battery; a body cover for surrounding the fuel cell controller, the fuel cell stack, the secondary battery and the hydrogen storage container in a vertical direction and on both lateral sides thereof, the body cover having: a head wind inlet at a front end of the body cover and in a part above the fuel cell stack; and a head wind outlet at a rear end of the body cover; and a head wind passage in the body cover between the head wind inlet and the head wind outlet, the head wind passage enclosing therein the fuel cell controller, the secondary battery and the hydrogen storage container.

The description above further discloses a second embodiment of the electric two-wheeled vehicle including: a front wheel and a seat, and a leg space therebetween; and a case shaped so as to project upward as seen in a longitudinal direction of a vehicle body, the case enclosing therein the fuel cell stack and the fuel cell controller and being positioned at the bottom of the leg space, in which the fuel cell stack is positioned at a bottom part in the case; the fuel cell controller is positioned in an upper projection of the case; and the head wind passage is formed between both lateral sides and the upper side of the upper projection, and the body cover.

According to the present teaching, a head wind flowing through the head wind inlet into the body cover first cools the fuel cell controller and then cools the secondary battery and then cools the hydrogen storage container. Since the fuel cell stack is positioned outside of the head wind passage in the body cover, unnecessary cooling of the fuel cell stack due to the head wind is avoided without additional use of a heat insulator.

Thus, according to the present teaching, the temperature of the fuel cell stack can be raised promptly and kept to temperatures high enough to enhance electricity generation efficiency. Further, the fuel cell controller having a relatively high heat release value can be cooled effectively by the head wind of the lowest temperature. Furthermore, the secondary battery and the hydrogen storage container have a relatively low heat release value. Accordingly, they can be cooled well even by the head wind which has already been used for cooling the fuel cell controller.

Therefore, the present teaching provides an electric two-wheeled vehicle in which a fuel cell unit, a secondary battery and a hydrogen storage container are cooled by a head wind to proper temperatures.

In accordance with the second embodiment, the head wind inlet is provided closely behind the front wheel. This allows a head wind to enter the head wind passage more easily, and thus a larger volume of a head wind is introduced therein to thereby provide more enhanced cooling efficiency. Further, the head wind passage is formed above and on the lateral sides of the upper projection of the case. Thus, the fuel cell controller can be cooled both on the upper side and on the lateral sides thereof. As a result, as described above, the volume of a head wind through the head wind passage increases, and also the area of a part of the upper projection to be exposed to the head wind increases. This provides more effective cooling for the fuel cell controller.

The description above still further discloses, according to a first preferred aspect, an electric two-wheeled vehicle comprising: a fuel cell unit having a fuel cell stack and a fuel cell controller; a hydrogen storage container storing therein a hydrogen gas to be supplied to the fuel cell unit; a secondary battery rechargeable by the fuel cell unit; a motor supplied with electricity from at least one of the fuel cell unit and the secondary battery to rotate a drive wheel, wherein the fuel cell controller is positioned on the fuel cell stack; the secondary battery is positioned in a rearward direction of the fuel cell controller; and the hydrogen storage container is positioned behind the secondary battery; a body cover for surrounding the fuel cell controller, the fuel cell stack, the secondary battery and the hydrogen storage container in a vertical direction and on both lateral sides thereof, the body cover having: a head wind inlet at a front end of the body cover and in a part above the fuel cell stack; and a head wind outlet at a rear end of the body cover; and a head wind passage in the body cover between the head wind inlet and the head wind outlet, the head wind passage enclosing therein the fuel cell controller, the secondary battery and the hydrogen storage container.

The description further discloses a second preferred aspect of the electric two-wheeled vehicle which further comprises: a front wheel and a seat, and a leg space therebetween; and a case shaped so as to project upward as seen in a longitudinal direction of a vehicle body, the case enclosing therein the fuel cell stack and the fuel cell controller and being positioned at the bottom of the leg space, wherein: the fuel cell stack is positioned at a bottom part in the case; the fuel cell controller is positioned in an upper projection of the case; and the head wind passage is formed between both lateral sides and the upper side of the upper projection, and the body cover.

The description above still further discloses, in order to provide an electric two-wheeled vehicle in which a fuel cell stack is kept at temperatures high enough to provide enhanced electricity generation efficiency, while the other components of a fuel cell unit are cooled by a head wind to proper temperatures, that a fuel cell controller 53 is positioned on a fuel cell stack 11, and a secondary battery 13 is positioned in a rearward direction of the fuel cell controller 53; hydrogen cylinders 14 are positioned behind the secondary battery 13; a body cover 6 is provided for surrounding the fuel cell controller 53, the fuel cell stack 11, the secondary battery 13 and the hydrogen cylinders 14 in a vertical direction and on both lateral sides thereof; the body cover 6 has a head wind inlet 55 at a front end thereof and in a part above the fuel cell stack 11, and head wind outlets 56 at a rear end of the body cover 6; and in the head cover 6 between the head wind inlet 55 and the head wind outlets 56, a head wind passage 61 is formed in which the fuel cell controller 53, the secondary battery 13 and the hydrogen cylinders 14 are enclosed.

## Claims

1. Straddle-type vehicle, in particular two-wheeled vehicle, comprising:
a fuel cell unit (12) having a fuel cell stack (11) and a fuel cell controller (53), and a body cover (6) for surrounding the fuel cell controller (53) and the fuel cell stack (11), the body cover (6) having a head wind inlet (55) at a front end of the body cover (6), and a head wind outlet (56) at a rear end of the body cover (6), and a head wind passage (61) in the body cover (6) between the head wind inlet (55) and the head wind outlet (56), wherein the head wind passage (61) encloses therein the fuel cell controller, and wherein the fuel cell stack (11) is positioned outside of the head wind passage (61).

2. Straddle-type vehicle according to claim 1, further comprising a hydrogen storage container storing therein a hydrogen gas to be supplied to the fuel cell unit and a secondary battery rechargeable by the fuel cell unit, wherein the fuel cell controller is positioned on the fuel cell stack, the secondary battery is positioned in a rearward direction of the fuel cell controller, and the hydrogen storage container is positioned behind the secondary battery.

3. Straddle-type vehicle according to claim 2, wherein the body cover is formed to surround the fuel cell controller, the fuel cell stack, the secondary battery and the hydrogen storage container in a vertical direction and on both lateral sides thereof, and wherein the head wind passage in the body cover between the head wind inlet and the head wind outlet encloses therein the fuel cell controller, the secondary battery and the hydrogen storage container.

4. Straddle-type vehicle according to one of the claims 1 to 3, wherein the head wind inlet at a front end of the body cover is formed in a part above the fuel cell stack.

5. Straddle-type vehicle according to one of the claims 1 to 4, wherein the fuel cell stack (11) is enclosed in a bottom part (51) of a case (41), and the fuel cell controller (53) is enclosed in an upper projection (52) of the case (41).

6. Straddle-type vehicle according to claim 5, wherein the fuel cell controller is in contact with a top wall (52a) and lateral sidewalls (52b) forming together the upper projection (52), for heat transfer between the fuel cell controller and the upper projection (52).

7. Straddle-type vehicle according to claim 5 or 6, wherein the upper projection (52) of the case (41) and a footrest section (22) of the body cover (6) define a space (S1) therebetween.

8. Straddle-type vehicle according to claim 7, wherein a heat sink (54) shaped so as to extend in the vertical and longitudinal directions in the space (S1) is attached at least to one of the lateral sides of the upper projection (52) of the case (41).

9. Straddle-type vehicle according to claim 7 or 8, wherein the space (S1) formed to surround the upper projection (52) on the upper side and on both lateral sides thereof is larger than a gap between the bottom part (51) of the case (41) and a footrest portion (22) of the body cover (6).

10. Straddle-type vehicle according to one of the claims 1 to 9, wherein the head wind inlet is provided closely behind the front wheel (2).

11. Straddle-type vehicle according to one of the claims 1 to 10, further comprising a front wheel (2) and a seat (3), and a leg space (4) therebetween, and a case (41) shaped so as to project upward as seen in a longitudinal direction of a vehicle body, the case (41) enclosing therein the fuel cell stack (11) and the fuel cell controller (53) and being positioned at the bottom of the leg space (4), wherein the fuel cell stack (11) is positioned at a bottom part (51) in the case (41), the fuel cell controller (53) is positioned in an upper projection (52) of the case (41), and the head wind passage (61) is formed between both lateral sides and the upper side of the upper projection (52), and the body cover (6).

12. Straddle-type vehicle according to one of the claims 1 to 11, further comprising an electric motor supplied with electricity from at least one of the fuel cell unit and the secondary battery to rotate a drive wheel.
